Europäisches Patentamt

European Patent Office

Office européen des brevets

(19)

(11) Numéro de publication : **0 326 448 B1**

(12) **FASCICULE DE BREVET EUROPEEN**

(45) Date de publication du fascicule du brevet :
**20.03.91 Bulletin 91/12**

(51) Int. Cl.⁵ : **F23R 3/22,** F02K 3/075,
F02K 3/11, F02K 1/38

(21) Numéro de dépôt : **89400080.1**

(22) Date de dépôt : **11.01.89**

(54) **Mélangeur de flux à section variable pour turboréacteur.**

(30) Priorité : **14.01.88 FR 8800345**

(43) Date de publication de la demande :
**02.08.89 Bulletin 89/31**

(45) Mention de la délivrance du brevet :
**20.03.91 Bulletin 91/12**

(84) Etats contractants désignés :
**DE FR GB SE**

(56) Documents cités :
**FR-A- 1 086 315
FR-A- 2 597 157
GB-A- 1 245 673
US-A- 4 527 390**

(73) Titulaire : **SOCIETE NATIONALE D'ETUDE ET
DE CONSTRUCTION DE MOTEURS
D'AVIATION, "S.N.E.C.M.A."
2, Boulevard du Général Martial Valin
F-75015 Paris (FR)**

(72) Inventeur : **Gastebois, Philippe Marc Denis
32, rue du ruisseau
F-77240 Vert-Saint-Denis (FR)**
Inventeur : **Picard, Jean Louis
243 Route de Livry
F-77000 Vaux le Pénil (FR)**
Inventeur : **Habrard, Alain Gérard Joseph
46, allée de la Douarde Macherin
F-77630 St Martin en Bière (FR)**

(74) Mandataire : **Moinat, François et al
S.N.E.C.M.A. Service des Brevets Boîte
Postale 81
F-91003 Evry Cédex (FR)**

EP 0 326 448 B1

Jouve, 18, rue Saint-Denis, 75001 PARIS

## Description

L'invention concerne les turboréacteurs double flux comportant un système de rechauffe du flux chaud et une rechauffe partielle du flux froid.

Dans les turboréacteurs double flux, une variation commandée du taux de dilution permet d'optimiser le fonctionnement du moteur dans tout le domaine de vol en passant par exemple d'un fonctionnement en croisière subsonique avec un taux de dilution élevé à un fonctionnement à grand nombre de Mach à haute altitude avec un taux de dilution faible et rechauffe allumée.

Le document US 3 118 276 montre un moteur de ce genre dans lequel quatre gouttières en forme de coquilles obturables par des volets permettent de faire varier le taux de dilution lors du fonctionnement du moteur en rechauffe.

Le document GB 1 245 673 montre quant à lui un moteur double flux sans variation du taux de dilution mais où un prélèvement d'air est effectué dans le flux froid pour refroidir les stabilisateurs de post-combustion du flux chaud.

Le premier dispositif évoqué crée une perte de charge dans le flux secondaire en amont de la confluence qui est génératrice de décollements et de pertes de charge parasites dans le flux primaire.

Le second dispositif a des conséquences similaires, même si elles sont un peu plus faibles que dans le premier cas.

La présente invention a pour but d'utilisation une telle perte de charge pour stabiliser une combustion en la générant par un stabilisateur de rechauffe à section variable.

Elle a également pour but de réaliser une variation du taux de dilution d'un turboréacteur double flux lors du passage de celui-ci en fonctionnement post-combustion.

Elle a également pour but d'améliorer le refroidissement des stabilisateurs de rechauffe du flux chaud sans créer de perte de charge parasite dans le flux froid, ceci par création d'une surpression à l'entrée des écopes de prélèvement d'air froid.

L'invention a donc pour objet un mélangeur de flux à section variable pour turboréacteur double flux à cycle variable comportant dans le flux chaud, ou flux primaire, des injecteurs radiaux disposés à l'intérieur de stabilisateurs de post-combustion et une rechauffe partielle du flux froid ou flux secondaire par une rampe circulaire fixe d'injection de carburant.

Selon l'invention, les injecteurs sont entourés d'une tubulure circulaire canalisant de l'air de refroidissement prélevé par des écopes disposées dans le flux froid à l'extérieur du carter intermédiaire séparant les flux froids et chauds et la rampe circulaire d'injection est disposée à l'intérieur d'une gouttière circulaire à section en "U" comportant une aile fixe et une aile mobile pouvant obturer partiellement le flux froid en régime maximal avec ou sans rechauffe réalisant ainsi une variation du taux de dilution et créant une surpression localisée dans le flux froid. Cette surpression due à l'obturation partielle du flux froid est utilisée pour gaver en air froid les écopes de refroidissement des stabilisateurs radiaux de rechauffe du flux primaire.

Dans un mode pratique de réalisation de l'invention, l'aile mobile de la gouttière circulaire est constituée de secteurs déplaçables radialement par des vérins dont le corps est fixé à l'anneau de turbine et dont la tige est reliée à l'aile mobile par des biellettes.

D'autres particularités de l'invention ou variantes de réalisation seront précisées ci-après en relation avec des figures parmi lesquelles :

– la figure 1 est une coupe longitudinale d'un turboréacteur comportant le dispositif selon l'invention ;

– la figure 2 montre en coupe longitudinale un premier mode de réalisation de l'invention dans lequel l'aile mobile de la gouttière circulaire est radialement intérieure à l'aile fixe, et ici en position de fonctionnement sec, les deux ailes étant repliées l'une contre l'autre ;

– la figure 3 montre dans une coupe longitudinale légèrement décalée par rapport à la précédente le même mode de réalisation en position ouverte de fonctionnement en post-combustion ;

– la figure 4 est, pour exemple, un mode de réalisation du stabilisateur radial de l'injecteur PC situé dans le flux chaud en section AA de la figure 2 :

– la figure 5 montre en vue transversale selon F de la figure 2 le stabilisateur de flamme circulaire partiellement ouvert en partie gauche de la figure et fermé en partie droite de la figure ;

– la figure 6 montre en coupe longitudinale un second mode de réalisation dans lequel l'aile mobile de la gouttière circulaire est radialement externe à l'aile fixe, en position ouverte (fonctionnement PC) ;

– la figure 7 montre une vue similaire à la précédente en position fermée (fonctionnement sec).

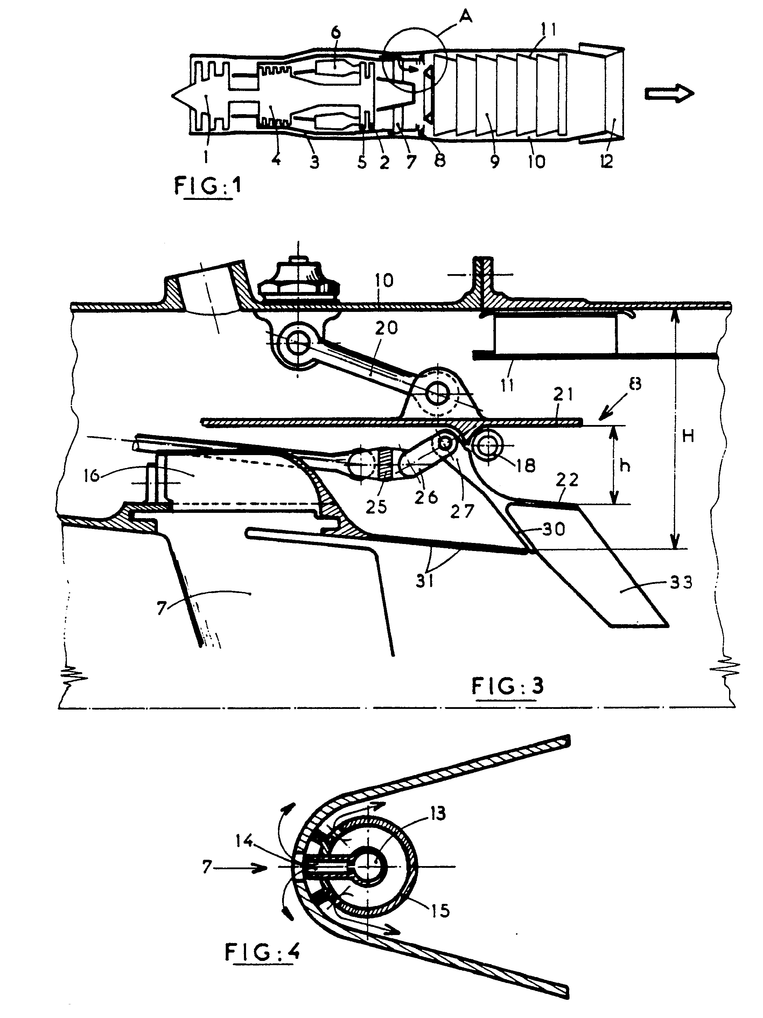

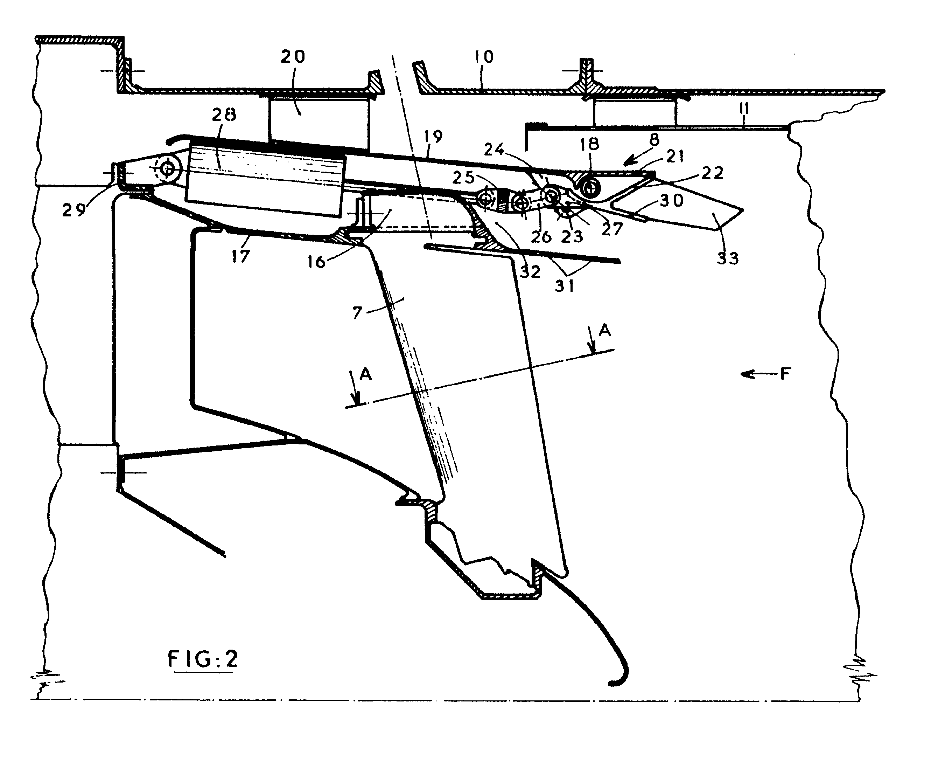

Sur la figure 1, on a représenté un turboréacteur double flux dans lequel un compresseur basse pression 1 entraîné par une turbine basse pression 2 effectue une première compression du flux d'air avant que celui-ci soit séparé en deux parties, une partie froide passant dans un canal annulaire 3 entourant le moteur et une partie chaude qui subit une seconde compression dans un compresseur haute pression 4 entraîné par une turbine haute tension 5. L'air comprimé reçoit de l'énergie dans une chambre de combustion 6 avant d'être détendu dans les turbines 5 et 2. Dans l'exemple ici représenté, l'air du flux chaud peut subir un nouvel apport d'énergie dans un système de post-combustion comprenant des injecteurs radiaux 7 dans le flux chaud en aval de la turbine BP 2 ainsi qu'une rampe circulaire 8 de rechauffe du flux froid, située au niveau de la confluence c'est-à-dire du plan transversal dans lequel les flux chaud et froid se mélangent puis sont évacués vers l'aval puis vers l'extérieur au travers d'un canal tubulaire dit canal PC 9 dont le carter 10 est protégé par une chemise de refroidissement 11, soit conformée en tuiles comme représenté à la figure 1, soit en forme de tôle ondulée multiperforée.

Le flux ainsi réchauffé fournit une poussée plus importante en sortie de tuyère 12.

L'invention se situe donc au niveau du système PC 7, 8 (détail A de la figure 1).

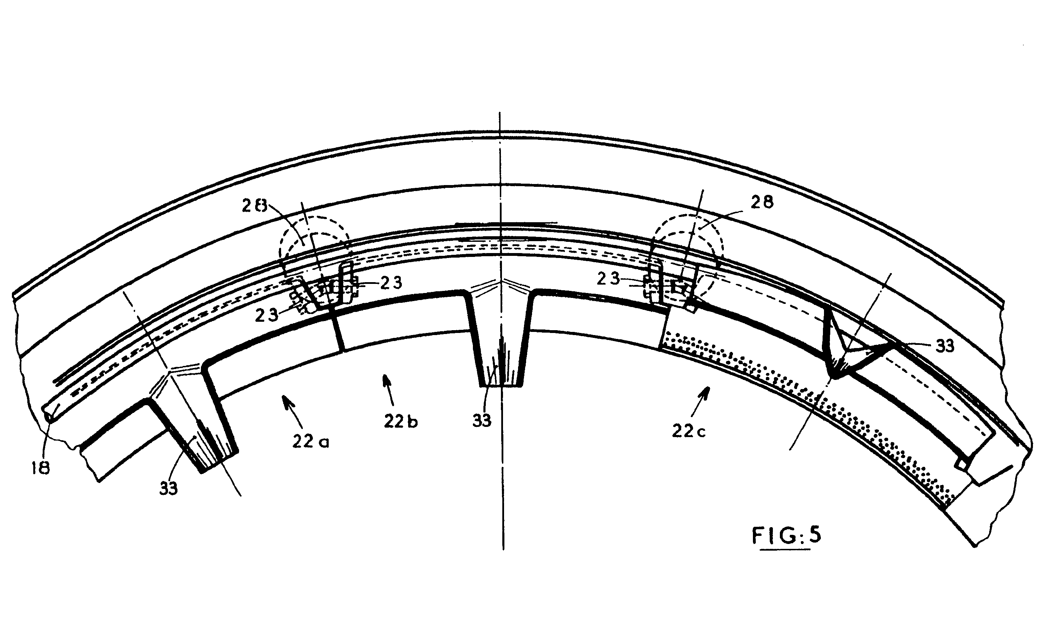

Dans le premier mode de réalisation de l'invention, montré aux figures 2 à 5, la rechauffe du flux primaire est assurée par des injecteurs PC radiaux 13 (dont un exemple de réalisation est représenté figure 4) disposés à l'intérieur des stabilisateurs en gouttière 7. Les injecteurs 13 possèdent des orifices 14 débitant le carburant à contre-courant en amont du stabilisateur 7 et sont entourés d'une gaine circulaire 15 canalisant de l'air de refroidissement prélevé par une écope 16 disposée dans le flux froid à l'extérieur du carter intermédiaire 17 séparant les flux froid et chaud. La gaine 15 est percée d'orifices permettant le refroidissement par impact et convection des parois intérieures de la gouttière 7.

Le dispositif comporte une rechauffe partielle du flux froid au moyen d'une rampe circulaire d'injection PC 18 disposée à l'intérieur de la gouttière circulaire 8. Celle-ci est formée de deux ailes, l'une 21 fixe et l'autre 22 mobile. L'aile 21 est constituée par la partie aval d'une virole intermédiaire annulaire 19 séparant le flux froid en deux canaux annulaires, ladite virole 19 étant fixée au carter externe 10 par des biellettes 20 articulées sur ledit carter et dont l'écoulement avec le carter 10 est assuré par des pontets 20.

L'aile mobile 22 disposée radialement à l'intérieur de l'aile fixe 21, est constituée de secteurs 22a, 22b, couvrant par exemple un douzième de la circonférence de l'aile. Chaque secteur est fixé à l'aile fixe 21 par deux axes 23 montés sur une patte 24 de l'aile 21.

Les secteurs sont reliés entre eux par un anneau de synchronisation 25 et par des biellettes 26 montées tournantes dans une chape 27 de chaque secteur. L'anneau de synchronisation 25 est actionné par un certain nombre de vérins 28 dont le corps est fixé à l'anneau de turbine 29 et dont la tige actionne l'anneau 25.

Les secteurs de l'aile mobile 22 comportent une languette annulaire radiale 30 qui, en position ouverte de l'aile 22, vient obturer la partie aval du canal annulaire situé entre le carter 17 et la virole 19. Seules des multiperforations 31 de la partie du carter 17 située en aval des stabilisateurs radiaux 7 laissent s'écouler une partie du flux froid vers l'aval.

Dans la position ouverte de l'aile 22, une surpression est donc localisée dans l'espace 32 séparant les viroles 17 et 19 et cette surpression permet de "gaver" les écopes 16 en air de refroidissement.

Les secteurs 22a, 22b.. possèdent également des gouttières radiales 33, qui en dépassant dans le flux chaud, aux positions intermédiaires de l'aile mobile 22, optimisent le mélange du flux froid avec le flux chaud et qui, en position fermée de l'aile 22, sont inactives sur le plan aérodynamique car effacées dans le prolongement de la gouttière 8.

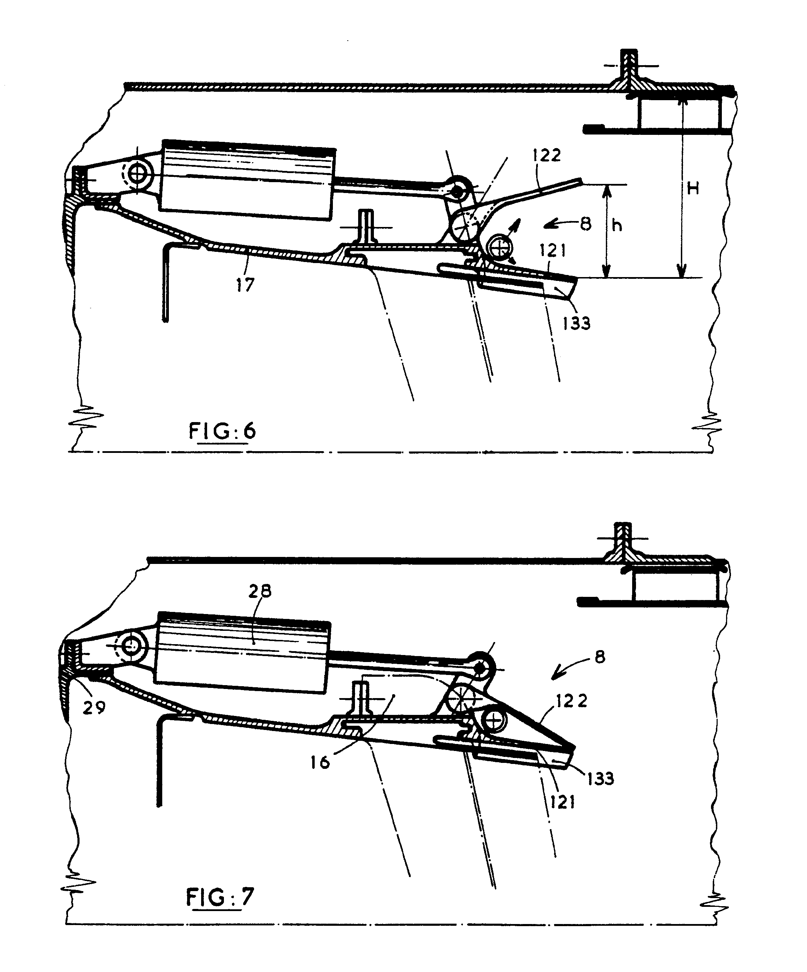

Dans la variante de réalisation montrée aux figures 6 et 7, la gouttière annulaire 8 a une structure inversée par rapport à la précédente puisque l'aile annulaire fixe 121 est constituée par l'extrémité du carter intermédiaire entre les flux froid et chaud située en aval des écopes 16 des stabilisateurs radiaux 7 et que l'aile mobile 122 est radialement extérieure à l'aile fixe 121.

Dans cette variante la tige des vérins 28 actionne directement chaque secteur 122a, 122b,... de l'aile 122 sans interposition d'un anneau de synchronisation. Toutefois sans sortir de l'invention un tel anneau pourrait être utilisé comme dans la variante précédente.

Dans les deux variantes la hauteur radiale h du stabilisateur annulaire 8 ouvert est limitée à 30% de la hauteur radiale H de la confluence entre le flux, l'étude du cycle de fonctionnement d'un turboréacteur ainsi équipé ayant montré que le bilan de performance est optimal en se limitant à cette latitude de variation.

Dans les deux variantes, en fonctionnement sec à faible régime, c'est-à-dire en croisière subsonique, le stabilisateur 8 est fermé et le taux de dilution est maximum. Le dispositif de commande d'ouverture de stabilisateur 8, relié au calculateur du moteur, permet de faire varier en continu l'ouverture de l'aile mobile de sorte qu'aux régimes intermédiaires en fonctionnement sec, on diminue continuement le taux de dilution tout en optimisant le mélange des flux par les gouttières radiales 33, 133, jusqu'au régime maximum, à température des gaz élevée où la PC est allumée, l'aile mobile 22 étant en position d'ouverture maximum, position dans laquelle le taux de dilution est minimal et le débit d'air secondaire de refroidissement des stabilisateurs PC 7 maximal.

Un avantage de la présente invention provient de la variation de pression disponible pour ventiler les stabilisateurs 7. En effet, la section de confluence en position ouverte est telle que lors du fonctionnement à température des gaz élevée (régime maximum avec et sans rechauffe) la surpression disponible par rapport au fonctionnement à régimes partiels (position fermée ou semi-ouverte) augmente la ventilation des stabilisateurs 7 d'environ 15%

A régimes partiels secs, outre la réduction des pertes par la position fermée, le prélèvement d'air secondaire de ventilation des stabilisateurs primaires se trouve naturellement réduit sans recourir à des clapets pour obturer les écopes 16.

Enfin, le dispositif de commande relié au calculateur du moteur, permet de faire varier l'ouverture de stabilisateur secondaire pour régler la hauteur h de celui-ci à la valeur minimale compatible avec la stabilité de combustion. Cette disposition permet de minimiser la perte de charge tout en garantissant le fonctionnement stable de la rechauffe.

## Revendications

1. Mélangeur de flux à section variable pour turboréacteur double flux à cycle variable comportant dans le flux chaud, ou flux primaire, des injecteurs radiaux (13) disposés à l'intérieur de stabilisateurs (7) de postcombustion et une rechauffe partielle du flux froid ou flux secondaire par une rampe circulaire (18) fixe d'injection de carburant caractérisé en ce que les injecteurs (13) sont entourés d'une tubulure circulaire (15) canalisant de l'air de refroidissement prélevé par des écopes (16) disposées dans le flux froid à l'extérieur du carter intermédiaire (17) séparant les flux froids et chauds et en ce que ladite rampe circulaire d'injection est disposée à l'intérieur d'une gouttière circulaire (8) comportant une aile fixe (21, 121) et une aile mobile (22, 122) pouvant obturer partiellement le flux froid en régime maximal avec ou sans rechauffe réalisant ainsi une variation du taux de dilution et créant une surpression localisée dans le flux froid, ladite surpression due à l'obturation partielle étant utilisée pour gaver en air froid les écopes (16) de refroidissement des stabilisateurs radiaux (7) de rechauffe du flux primaire.

2. Mélangeur de flux selon la revendication 1 caractérisé en ce que l'aile mobile (22, 122) est constituée de secteurs (22a, 22b, 122a, 122b) déplaçables radialement par des vérins (28) dont le corps est fixé à l'anneau de turbine (29) et dont la tige est reliée à l'aile mobile par des biellettes (26).

3. Mélangeur de flux selon la revendication 2, caractérisé en ce qu'un anneau (25) de synchronisation du déplacement de tous les secteurs (22a, 22b) est interposé entre les tiges de vérins et les biellettes (26) de l'aile mobile.

4. Mélangeur de flux selon l'une quelconque des revendications 1 à 3, caractérisé en ce que la hauteur de la gouttière circulaire constituée par l'aile fixe et l'aile mobile ouverte est inférieure ou égale à 30% de la hauteur totale H de la confluence.

5. Mélangeur de flux selon l'une quelconque des revendications 1 à 4 caractérisé en ce que l'aile mobile (22) est disposée radialement à l'intérieur de l'aile fixe (21).

6. Mélangeur de flux selon la revendication 5, caractérisé en ce que l'aile mobile comporte une languette annulaire radiale (30) apte à venir s'appuyer, en position ouverte, sur le bord aval du carter intermédiaire.

7. Mélangeur de flux selon l'une des revendications 5 ou 6, caractérisé en ce que chaque secteur de l'aile mobile (22) comporte une gouttière radiale (33) de mélange de flux apte à dépasser dans le flux chaud en position ouverte de l'aile mobile (22) et à être effacée dans le flux froid en position fermée.

8. Mélangeur de flux selon l'une quelconque des revendications 5 à 7, caractérisé en ce que l'aile fixe (21) est constituée par l'extrémité aval d'une virole intermédiaire (19) séparant le flux froid en deux parties l'une radialement externe et l'autre radialement interne, ladite virole étant fixée au carter extérieur (10) par des biellettes (20).

9. Mélangeur de flux selon l'une quelconque des revendications 5 à 8, caractérisé en ce que l'extrémité aval du carter intermédiaire (17) comporte des multiperforations (31).

10. Mélangeur de flux selon l'une quelconque des revendications 1 à 4, caractérisé en ce que l'aile mobile (22) est radialement extérieure à l'aile fixe (121) et en ce que l'aile fixe et formée par l'extrémité aval du carter intermédiaire (17).

11. Mélangeur de flux selon l'une quelconque des revendications 1 à 10 caractérisé en ce que chaque écope (16) est constituée d'une entrée d'air axiale disposée radialement dans le flux froid en amont de la gouttière circulaire (8), ladite entrée d'air débouchant dans une tubulure radiale (15) entourant l'injecteur radial (13) en aval du stabilisateur, ladite tubulure comportant des perforations à contre-courant permettant le refroidissement du stabilisateur radial (7) par impact de l'air prélevé dans le flux froid.

## Claims

1. Variable cross section flow mixer for variable cycle by-pass turbojet engines comprising in the hot, or primary flow, radial injectors (13) arranged inside reheat stabilisers (7) and a partial reheat of the cold, or secondary flow by a fixed circular rail (18) of fuel injectors characterised in that the injectors (13) are surrounded by a circular tube (15) conveying cooling air drawn off by scoops (16) placed in the cold flow outside the intermediate casing (17) separating the cold and hot flows and in that the said circular injector rail is placed inside a circular channel (8) comprising a fixed wing (21, 121) and a movable wing (22, 122) able partially to close off the cold flow at maximum power whether with or without reheat, thus achieving a variation in the by-pass ratio and creating a localised overpressure in the cold flow, the said overpressure, due to this partial closure, being used to supply air at a boosted pressure to the scoops (16) cooling the radial reheat stabilisers (7) of the primary flow.

2. Flow mixer in accordance with Claim 1, characterised in that the movable wing (22, 122) is made up of segments (22a, 22b, 122a, 122b) radially movable by rams (28) of which the bodies are fixed to the turbine ring and the piston rods are coupled to the movable wing by the linkages (26).

3. Flow mixer in accordance with Claim 2, characterised in that a ring (25) synchronising the movements of all the segments (22a, 22b) is interposed between the piston rods of the rams and the linkages (26) of the mobile wing.

4. Flow mixer in accordance with any of the Claims 1 to 3, characterised in that the height of the circular channel constituted by the fixed wing and the movable wing, when open, is less than or equal to 30% of the total height H at the point of confluence of the flows.

5. Flow mixer in accordance with any of the Claims 1 to 4, characterised in that the movable wing (22) is placed radially inside the fixed wing (21).

6. Flow mixer in accordance with Claim 5, characterised in that the movable wing comprises an annular lip (30) which, when it [the wing] is in the open position, bears against the rear edge of the intermediate casing.

7. Flow mixer in accordance with either of Claims 5 or 6, characterised in that each segment of the movable wing (22) comprises a radial channel (33) for mixing the flow liable to spill into the hot flow in the open position of the movable wing (22) and to be retracted into the cold flow when [the wing] is in the closed position.

8. Flow mixer in accordance with any of the Claims 5 to 7, characterised in that the fixed wing (21) is constituted by the downstream end of an intermediate shell (19) separating the cold flow into two parts, the one radially external and the other radially internal, the said shell being fixed to the outer casing (10) by the linkages (20).

9. Flow mixer in accordance with any of the Claims 5 to 8, characterised in that the downstream end of the intermediate casing (17) comprises the multiple perforations (31).

10. Flow mixer in accordance with any of the Claims 1 to 4, characterised in that the movable wing (22) is radially outside the fixed wing (22) and in that the fixed wing is formed by the downstream end of the intermediate casing (17).

11. Flow mixer in accordance with any of the Claims 1 to 10, characterised in that each scoop (16) is made up of an axial air intake placed radially in the cold flow upstream of the said circular channel (8), the said air intake opening into a radial tube (15) surrounding the radial injector (13) downstream of the stabiliser, the said tube having counterflow perforations cooling the radial stabiliser (7) by the impact of the air drawn off from the cold flow.

**Ansprüche**

1. Strahlmischer mit variablem Durchtrittsquerschnitt für ein Zweikreis-TL-Triebwerk mit variablem Zyklus, mit in dem heißen oder Primärstrahl im Innern von Nachverbrennungs-Stabilisatoren (4) angeordneten radialen Einspritzdüsen (13) und einer teilweisen Nacherhitzung des kalten oder Sekundärstroms durch eine feste kreisförmige Kraftstoff-Einspritzrampe (18), dadurch gekennzeichnet, daß die Einspritzdüsen (13) umgeben sind von einem kreisförmigen Rohr (15) zur Kanalisierung der Kühlluft, die durch in dem kalten Strahl außerhalb des den kalten und den heißen Strahl trennenden Zwischengehäuses (17) angeordnete Schöpfelemente (16) entnommen wird, und daß die kreisförmige Einspritzrampe innerhalb einer kreisförmigen Rinne (8) mit einer festen (21, 121) und einer beweglichen (22, 122) Klappe angeordnet ist, die den kalten Strahl bei maximaler Drehzahl mit oder ohne Nacherhitzung teilweise absperren und so eine Änderung des Verdünnungsverhältnisses herbeiführen können und in dem kalten Strahl einen lokalen Überdruck erzeugen, wobei dieser durch die teilweise Absperrung erzeugte Überdruck dazu verwendet wird, die Schöpfelemente (16) zur Kühlung der radialen Stabilisatoren (7) zum Nacherhitzen des Primärstrahls mit kalter Luft zu laden.

2. Strahlmischer nach Anspruch 1, dadurch gekennzeichnet, daß die bewegliche Klappe (22, 122) aus Sektoren (22a, 22b ; 122a, 122b) besteht, die durch Antriebszylinder (28) in radialer Richtung bewegbar sind, deren Körper an dem Turbinenring (2) befestigt ist und deren Stange über Pleuelhebel (26) mit der beweglichen Klappe verbunden ist.

3. Strahlmischer nach Anspruch 2, dadurch gekennzeichnet, daß zwischen den Stangen der Antriebszylinder und den Pleuelhebeln (26) der beweglichen Klappe ein Ring (25) zur Synchronisierung der Bewegungen aller Sektoren angeordnet ist.

4. Strahlmischer nach einem der Ansprüche 1 bis 3, dadurch gekennzeichnet, daß die Höhe der von der festen und der geöffneten beweglichen Klappe gebildeten kreisförmigen Rinne kleiner oder gleich 30% der Gesamthöhe des Strahl -Zusammenflusses ist.

5. Strahlmischer nach einem der Ansprüche 1 bis 4, dadurch gekennzeichnet, daß die bewegliche Klappe (22) radial innerhalb der festen Klappe (21) angeordnet ist.

6. Strahlmischer nach Anspruch 5, dadurch gekennzeichnet, daß die bewegliche Klappe eine ringförmige radiale Zunge (30) besitzt, die sich in Öffnungsstellung an dem stromaufwärtigen Rand des Zwischengehäuses abstützen kann.

7. Strahlmischer nach einem der Ansprüche 5 oder 6, dadurch gekennzeichnet, daß jeder Sektor der beweglichen Klappe (22) eine radiale Rinne (33) zur Strahlmischung aufweist, die in Öffnungsstellung der beweglichen Klappe in den heißen Strahl hineinragen und in Schließstellung in den kalten Strahl zurückgesetzt werden kann.

8. Strahlmischer nach einem der Ansprüche 5 bis 7, dadurch gekennzeichnet, daß die feste Klappe (21) von dem stromabwärtigen Endbereich eines Zwischenrings (19) gebildet ist, der den kalten Strahl in einen radial äußeren und einen radial inneren Teil teilt und über Pleuelhebel (20) an dem äußeren Gehäuse (10) befestigt ist.

9. Strahlmischer nach einem der Ansprüche 5 bis 8, dadurch gekennzeichnet, daß der stromabwärtige Endbereich des Zwischengehäuses (17) Mehrfachperforationen aufweist.

10. Strahlmischer nach einem der Ansprüche 1 bis 4, dadurch gekennzeichnet, daß die bewegliche Klappe (22) sich radial außerhalb der festen Klappe (121) befindet und daß die feste Klappe (121) von dem stromabwärtigen Endbereich des Zwischengehäuses (17) gebildet ist.

11. Strahlmischer nach einem der Ansprüche 1 bis 10, dadurch gekennzeichnet, daß jedes Schöpfelement (16) aus einem in radialer Richtung in dem kalten Strahl stromaufwärts der kreisförmigen Rinne (8) angeordneten axialen Lufteinlaß besteht, der in einem radialen Rohr (15) mündet, das die radiale Einspritzdüse (13) stromabwärts des Stabilisators umgibt und Gegenstromöffnungen besitzt, die das Kühlen des radialen Stabilisators (7) durch Aufprall der in dem kalten Strahl entnommenen Luft ermöglichen.

FIG:1

FIG:3

FIG:4

FIG:2

EP 0 326 448 B1

FIG:5

EP 0 326 448 B1

FIG:6

FIG:7